# FASCICULE DE BREVET EUROPEEN

(11) **EP 1 515 977 B1**
(45) Date de publication et mention de la délivrance du brevet: **29.08.2007**
(21) Numéro de dépôt: 03760774.4
(22) Date de dépôt: 23.06.2003
(51) Int. Cl.: C07F 7/14, C07F 7/18

(54) **PROCEDE DE PREPARATION D ORGANO DIALKYLALCOXYSILANE**
VERFAHREN ZUR HERSTELLUNG VON ORGANODIALKYLALKOXYSILAN
METHOD OF PREPARING ORGANO DIALKYLALKOXYSILANE

(30) Priorité: 21.06.2002 FR 0207713; 02.12.2002 FR 0215114
(43) Date de publication de la demande: 23.03.2005
(60) Demande divisionnaire: 05026550.3
(73) Titulaire: Rhodia Chimie SA, 92512 Boulogne-Billancourt Cedex (FR)
(72) Inventeur: RAMDANI, Kamel, F-69420 TUPIN ET SEMONS (FR); VOGIN, Bernard, F-69630 CHAPONOST (FR); GUENNOUNI, Nathalie, La Clairière, La Clairière, F-69540 IRIGNY (FR)
(74) Mandataire: Delenne, Marc
(86) Numéro de dépôt international: PCT/FR2003/001921
(87) Numéro de publication internationale: WO 2004/000852

(56) Documents cités:
- EP-A- 0 519 181
- EP-A- 0 680 997
- EP-A- 1 156 052
- DE-C- 10 053 037
- FR-A- 2 823 210
- FR-A- 2 830 013
- DATABASE CA [en ligne] CHEMICAL ABSTRACTS SERVICE, COLUMBUS, OHIO, US; TACHIKAWA, MAMORU ET AL: "Manufacture of aliphatic chlorosilane compounds by hydrosilylation reaction" retrieved from STN Database accession no. 133:239723 CA XP002243778 & JP 2000 256372 A (DOW CORNING ASIA LTD., JAPAN) 19 septembre 2000 (2000-09-19)
- DATABASE CA [en ligne] CHEMICAL ABSTRACTS SERVICE, COLUMBUS, OHIO, US; KUBOTA, TOORU ET AL: "Preparation of (halopropyl)dimethylchlorosilane and catalysts used in the preparation" retrieved from STN Database accession no. 123:340390 CA XP002243779 & JP 07 126271 A (SHINETSU CHEM IND CO, JAPAN) 16 mai 1995 (1995-05-16)
- DATABASE CA [en ligne] CHEMICAL ABSTRACTS SERVICE, COLUMBUS, OHIO, US; BELYA-KOVA, Z. V. ET AL: "Reaction of hydrosilanes with allyl chloride" retrieved from STN Database accession no. 63:54759 CA XP002243780 & ZHURNAL OBSHCHEI KHIMII (1965), 35(6), 1048-52, 1965,
- RYAN, JOHN W. ET AL: "Addition of silicon hydrides to olefinic double bonds. V. The addition to allyl and methallyl chlorides" JOURNAL OF THE AMERICAN CHEMICAL SOCIETY (1960), 82, 3601-4, 1960, XP002243777

## Description

La présente invention concerne un procédé de préparation d'organo dialkylalcoxysilane par un procédé continu en présence d'un alcanol sur un oméga-halogénoalkyl dialkylhalogenosilane :

L'invention concerne plus particulièrement la fabrication d'un éthoxypropylsilane à partir d'un chloropropylsilane. Des procédés connus sur cette synthèse concernent plus spécifiquement le dichloropropylsilane et le trichloropropylsilane. On trouve dans l'art antérieur des documents qui décrivent des procédés de préparation d'organodialkylalkoxysilanes pouvant faire appel à la mise en oeuvre d'une réaction d'alcanolyse de silanes précurseurs halogénés ; on citera en particulier CA, 63, 54759 et JACS (1960), 82, 3 601-4. Mais à la connaissance de la Demanderesse l'art antérieur ne propose pas de protocole opératoire où la réaction d'alcanolyse est conduite dans un réacteur à contre-courant qui permet de réaliser à la fois la réaction d'alcoxylation du silane précurseur et la séparation du flux d'alcanol et d'acide halogéné formé. Le procédé selon l'invention permet d'utiliser comme réactif le 3-chloropropyl diméthylchloro silane tout en obtenant l'éthoxydiméthyl3-chloropropylsilane avec de très haut rendements. La réaction chimique est la suivante :

ClMe₂Si-CH₂CH₂CH₂Cl + EtOH → (EtO)Me₂Si-CH₂CH₂CH₂Cl + HCl

L'éthoxylation du 3-chloropropyl diméthylchlorosilane peut être conduite de façon quantitative et sélective en présence d'une base. L'utilisation par exemple d'une base organique de type amine tertiaire (dont la triéthylamine) permet de neutraliser stoechiométriquement l'acide formé. Toutefois, l'utilisation d'une base et l'allongement et la complication du procédé liés à son utilisation et à son élimination finale constitue un désavantage certain. Par ailleurs, en l'absence de base, la réaction conduit à des performances non satisfaisantes dans des conditions classiquement utilisées pour ce type de réaction : coulée d'éthanol sur un pied de 3-chloropropyl diméthylchlorosilane. Il s'agit d'un procédé en réacteur batch qui donne d'excellents résultats seulement si la matière première est le dichloropropylméthylchlorosilane ou le trichloropropylchlorosilane : Taux de transformation (TT) = 100 % et Sélectivité (RT) > 95 %. En effet, la spécificité du groupement diméthylchlorosilane, comparée par exemple au groupe trichlorosilane, conduit à une réactivité plus faible vis à vis de l'éthanol et par conséquence génère la formation plus importante de produits secondaires. Ces produits secondaires sont issus essentiellement d'une oligomérisation de la fonction silane, réaction consécutive à la réaction :

EtOH + HCl → EtCl + H₂O

2[ClMe₂Si-CH₂CH₂CH₂Cl] →+ H₂O → ClCH₂CH₂CH₂-SiMe₂-O-Me₂Si-CH₂CH₂CH₂Cl + HCl

Le but principal de la présente invention est précisément de proposer un procédé performant du type ci-dessus dont le produit de départ est un monochloro triorganosilane, en particulier le 3-chloropropyl diméthylchlorosilane et pouvant être mis en oeuvre en l'absence de base.

Ce but et d'autres est atteint par la présente invention qui concerne en effet un un procédé de préparation d'organo dialkylalcoxysilane par un procédé continu consistant à réaliser une mise en contact continue à contre-courant d'un alcool, par exemple de type alcanol, avec un oméga-halogénoalkyl dialkylhalogénosilane.

Les conversions obtenues sont généralement supérieures à 90% et peuvent atteindre 100%, et les sélectivités obtenues sont également très élevées.

La réaction d'alcoolyse mise en jeu selon l'invention peut être schématisée par l'équation suivante : 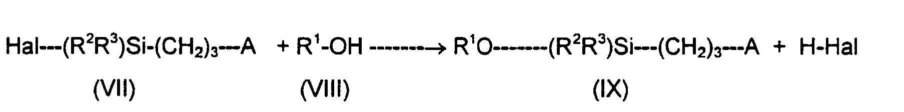 où :
- le symbole Hal représente un atome d'halogène choisi parmi les atomes de chlore, brome et iode, l'atome de chlore étant préféré,
- les symboles R¹, identiques ou différents, représentent chacun un groupe hydrocarboné monovalent choisi parmi un radical alkyle, linéaire ou ramifié, ayant de 1 à 15 atomes de carbone et un radical alcoxyalkyle, linéaire ou ramifié, ayant de 2 à 8 atomes de carbone ;
- les symboles R² et R³, identiques ou différents, représentent chacun un groupe hydrocarboné monovalent choisi parmi un radical alkyle, linéaire ou ramifié, ayant de 1 à 6 atomes de carbone et un radical phényle ;
- A représente un groupe amovible choisi parmi : soit un atome d'halogène Hal appartenant aux atomes de chlore, brome et iode, l'atome de chlore étant préféré ; soit un radical para-R⁰-C₆H₄-SO₂-O- où R⁰ est un radical alkyle, linéaire ou ramifié en C1-C4, le radical tosylate para-CH₃-C₆H₄-SO₂-O- étant préféré ; soit un radical R⁰-SO₂-O- où R⁰ est tel que défini ci-avant, le radical mésylate CH₃-SO₂-O- étant préféré ; soit un radical R⁰-CO-O- où R⁰ est tel que défini ci-avant, le radical acétate CH₃-CO-O- étant préféré, le radical A le plus préféré étant l'atome de chlore.

Selon l'invention, le procédé continu permet donc de réaliser dans un réacteur à contre-courant , à la fois la réaction d'alcoxylation et la séparation du flux d'alcanol de formule (VIII) et d'H-Hal (généralement HCl) du flux de silanes. Ensuite il est possible, si on le souhaite, de séparer ultérieurement l'alcanol de l'H-Hal. Par la suite, l'alcool ainsi purifié peut être réinjecté dans le réacteur. Plus précisément, on fait en sorte que, à l'intérieur du réacteur vont circuler à contre-courant un fluide liquide descendant comprenant le silane de formule (VII), et un fluide gazeux ascendant comprenant l'alcool de formule (VIII). A l'intérieur du réacteur, se trouve aussi à l'état de vapeur le produit de formule H-Hal. De manière avantageuse, l'intérieur du réacteur où est mise en oeuvre la réaction d'alcoolyse est constitué d'une colonne à garnissage ou à plateaux de façon à créer des zones réactionnelles en phase liquide : la température est comprise entre la température d'ébullition de l'alcool de formule (VIII) et la température d'ébullition du silane de formule (VII). La réaction est mise en oeuvre dans le réacteur soit à pression atmosphérique, soit à pression réduite, soit a pression supra atmosphérique.

Dans la mise en oeuvre avantageuse de l'invention, on introduit l'alcool dans le bouilleur et/ou dans la partie inférieure de la colonne. Le silane, quant à lui, est introduità un endroit quelconque de la colonne qui se situe en dessus de la zone d'introduction de l'alcool. Dans ce cas, le silane descend à contre-courant la colonne et réagit à contre-courant avec l'éthanol vaporisé qui entraîne l'HCl formé soit vers un condenseur situé en haut de colonne, soit le mélange à l'état de vapeur est séparé à part. Le silane alcoxylé est récupéré en pied de colonne dans le bouilleur et/ou par soutirage latéral dans la partie inférieure de la colonne.

Le procédé comporte un stripage ou entraînement à la vapeur de l'HCl formé du milieu réactionnel et un déplacement de l'équilibre en augmentant la concentration en alcanol (éthanol) par distillation de l'éthanol du milieu réactionnel pour éliminer l'HCl.

Il est préférable, afin d'être toujours en excès d'alcool, de faire fonctionner le réacteur en travaillant avec un ratio molaire alcool/silane supérieur à 1 et, de préférence, compris entre 1,2 et 20. Dans le cas du couple éthanol/3-chloropropyldiméthylchlorosilane, ce ratio molaire alcool/silane est supérieur à 1,2 et, de préférence, supérieur à 3 et, généralement au plus égal à 20. Il est par ailleurs préférable, dans la mise en oeuvre avantageuse de l'invention, d'introduire l'alcool en partie inférieure de la colonne et le silane en partie supérieure de la colonne.

La colonne peut être munie dans sa structure interne d'un garnissage de type vrac ou ordonné, ou bien de plateaux. Le contrôle du taux de reflux est un moyen avantageux pour ajuster le profil des températures dans la colonne, mais surtout pour régler la quantité d'H-Hal présent dans la colonne.

Une amélioration de conduite de ce réacteur à contre-courant peut consister à réaliser au moins un soutirage latéral des flux gazeux à base d'alcool et de H-Hal à un ou plusieurs niveaux de la colonne pour minimiser la concentration en Hal dans le réacteur. On sait que H-Hal non éliminé peut limiter le déplacement de la réaction équilibrée et engendrer des réactions parasites. Un flux d'alcool frais ou issu d'un recyclage de l'alcool acide peut être injecté dans chaque zone de soutirage pour compenser le fluide soutiré.

Comme indiqué ci-dessus, dans le cas ou les produits répondant aux formules (VII), (VIII) et (IX) présentent des groupes R¹ éthyle R² et R³ méthyle et A et Hal représentent un atome de chlore, l'alcool est un alcanol consistant dans l'éthanol, et le silane est le 3-chloropropyldiméthylchlorosilane avec formation de HCl.

Si la réaction est conduite à pression atmosphérique, la température de réaction à l'intérieur du réacteur, et en particulier à l'intérieur de la colonne doit être supérieure à celle du gaz vecteur de stripage, soit par exemple 78°C dans le cas de l'éthanol, et inférieure à la température du 3-chloropropyldiméthylchlorosilane, soit 178°C. Il est ainsi recommandé de travailler à pression réduite pour limiter la solubilité de l'HCl dans l'éthanol et faire la réaction à une température inférieure à celle correspondant à une pression atmosphérique, ce qui permet de limiter les réactions parasites et de gagner en sélectivité.

L'alcool acide, c'est à dire chargé en HCl, doit être purifié avant recyclage dans le milieu réactionnel, par distillation éventuellement azéotropique, par adsorption sur résine, par neutralisation ou par séparation sur membrane.

Le stripage de l'HCl peut être couplé avec un stripage de l'eau présente dans le milieu, en travaillant à une température supérieure à la température d'ébullition de l'eau à la pression considérée.

La réaction d'alcoolyse, dans ce réacteur à contre-courant, peut être mise en oeuvre éventuellement en présence d'un solvant organique et/ou d'un gaz inerte. Le solvant est de type aprotique et peu polaire tel que des hydrocarbures aliphatiques et/ou aromatiques Le solvant utilisé a une température d'ébullition à la pression de service (pression atmosphérique) comprise entre la température d'ébullition de l'alcool de formule (VIII), par exemple 77.8 °C pour l'éthanol et celle du silane de formule (VII) par exemple 178°C pour le 3-chloropropyl diméthylchlorosilane. Comme solvant approprié pour le couple éthanol/3-chloropropyl diméthylchlorosilane, on peut citer notamment le toluène, le monochlorobenzene, le xylène. Le rôle du solvant est de stripper l'acide chlorhydrique (HCl) par entraînement mécanique (l'alcool est également entraîné et un recyclage après purification est envisageable) et également de créer une zone d'épuisement (pas ou très peu d'HCl en pied de colonne) pour minimiser les réactions chimiques parasites.

L' organodialkylalcoxysilane de formule (IX) ainsi obtenu est plus particulièrement utilisable comme produit de départ pour la préparation de composés organosiliciques contenant du soufre, répondant à la formule générale moyenne (I): 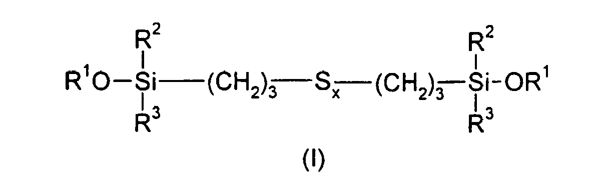 dans laquelle :
x est un nombre, entier ou fractionnaire, allant de 1,5 ± 0,1 à 5 ± 0,1 ; et
les symboles R¹, R², R³, Hal et A sont tels que définis supra,

Dans la formule (I) précédente, les radicaux R¹ préférés sont choisis parmi les radicaux : méthyle, éthyle, n-propyle, isopropyle, n-butyle, CH₃OCH₂-, CH₃OCH₂CH₂- et CH₃OCH(CH₃)CH₂- de manière plus préférée, les radicaux R¹ sont choisis parmi les radicaux : méthyle, éthyle, n-propyle et isopropyle.

Les radicaux R² et R³ préférés sont choisis parmi les radicaux : méthyle, éthyle, n-propyle, isopropyle, n-butyle, n-hexyle et phényle ; de manière plus préférée, les radicaux R² et R³ sont des méthyles.

Le nombre x, entier ou fractionnaire, va de préférence de 3 ± 0,1 à 5 ± 0,1, et de manière plus préférée de 3,5 ± 0,1 à 4,5 ± 0,1.

Les monoorganoxysilanes polysulfurés répondant à la formule (I) qui sont spécialement visés par la présente invention, sont ceux de formule : 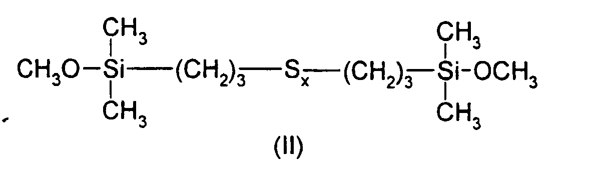 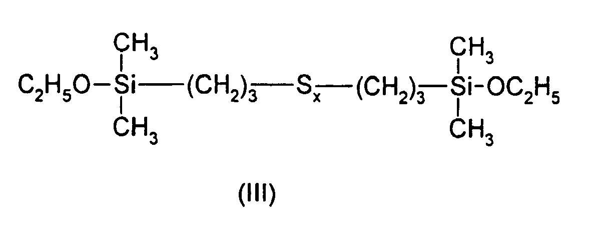 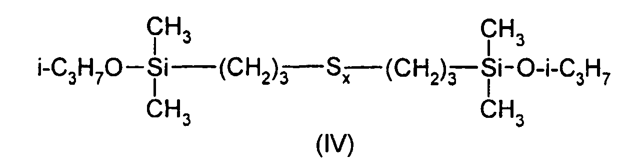 dans lesquelles le symbole x est un nombre entier ou fractionnaire allant de 1,5 ± 0,1 à 5 ± 0,1, de préférence de 3 ± 0,1 à 5 ± 0,1, et de manière plus préférée de 3,5 ± 0,1 à 4,5 ± 0,1.

Dans le présent mémoire, on précisera que le symbole x des formules (I), (II), (III) et (IV) est un nombre, entier ou fractionnaire, qui représente le nombre d'atomes de soufre présents dans une molécule de formule (I), (II), (III) et (IV).

En pratique ce nombre est la moyenne du nombre d'atomes de soufre par molécule de composé considéré, dans la mesure où la voie de synthèse choisie donne naissance à un mélange de produits polysulfurés ayant chacun un nombre d'atomes de soufre différent. Les monoorganoxysilanes polysulfurés synthétisés sont en fait constitués d'une distribution de polysulfures, allant du monosulfure à des polysulfures plus lourds (comme par exemple S_{≥5}), centrée sur une valeur moyenne en mole (valeur du symbole x) se situant dans les domaines général
(x allant de 1,5 ± 0,1 à 5 ± 0,1), préférentiel (x allant de 3 ± 0,1 à 5 ± 0,1) et plus préférentiel (x allant de 3,5 ± 0,1 à 4,5 ± 0,1) mentionnés supra.

Les produits de formule (I) peuvent être préparés de la façon suivante à partir des organo dialkylalcoxysilane de formule (IX), préalablement préparés au cours de l'étape b) par le procédé continu de l'invention, par réaction au cours de l'étape c) dudit produit de formule (IX) sur un polysulfure alcalin de formule (X) suivant le schéma réactionnel suivant :

### Etape c) :

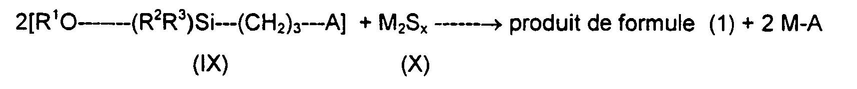

où :
- les symboles R¹, R², R³, A et x sont tels que définis supra,
- le symbole M représente un métal alcalin,
- la réaction est réalisée :
   - en faisant réagir à une température allant de 20°C à 120°C, soit le milieu réactionnel obtenu à l'issue de l'étape (b), soit le dérivé de monoorganoxydiorganosilylpropyle de formule (IX) pris isolément après séparation dudit milieu, avec le polysulfure métallique de formule (X) à l'état anhydre, en utilisant 0,5 ± 15% mole de polysulfure métallique de formule (X) par mole du réactif de formule (IX) et en opérant éventuellement en présence d'un solvant organique polaire (ou non polaire) inerte,
   - et en isolant le polysulfure de bis-(monoorganoxysilylpropyle) de formule (I) formé.

Le procédé continu selon la présente invention permet d'accéder à des polysulfures de bis-(monoorganoxysilylpropyle) de formule (I). Les diorganohalogénosilanes de formule (VII) peuvent être préparés avantageusement à l'échelle industrielle par un procédé tel que notamment celui décrit dans WO-A-99/31111, cité comme référence.

Le procédé de préparation des produits de formule (I) se déroule quasi quantitativement, sans faire appel à des réactifs et/ou sans formation de produits secondaires qui sont des composés toxiques ou polluants pour l'environnement (comme H₂S et les métaux alcalins dans le cas de l'étape de polysulfuration),

Le produit de départ à l'étape b) de formule (VII) peut être préparé selon le procédé suivant :

### étape a)

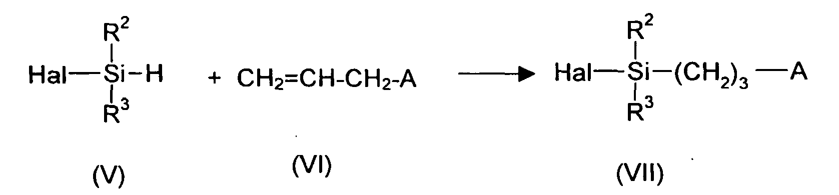

où :
- le symbole Hal représente un atome d'halogène choisi parmi les atomes de chlore, brome et iode, l'atome de chlore étant préféré, et
- les symboles A, R² et R³ sont tels que définis supra,
la réaction est réalisée :
- en faisant réagir à une température allant de -10°C à 200°C une mole du diorganohalogénosilane de formule (V) avec une quantité molaire stoechiométrique ou différente de la stoechiométrie du dérivé d'allyle de formule (VI) en opérant, en milieu homogène ou hétérogène, en présence d'un initiateur consistant :
   - soit dans un activateur catalytique consistant dans : (i) au moins un catalyseur comprenant au moins un métal de transition ou un dérivé dudit métal, pris dans le groupe formé par Co, Ru, Rh, Pd, Ir et Pt ; et éventuellement (2i) au moins un promoteur de réaction d'hydrosilylation,
   - soit dans un activateur photochimique, consistant en particulier dans un rayonnement ultraviolet approprié ou dans un rayonnement ionisant approprié,
et éventuellement en isolant le dérivé de diorganohalogénosilylpropyle de formule (VII) formé ;

Selon un mode particulièrement adapté de réalisation, le procédé qui vient d'être décrit consiste à enchaîner les étapes (a), (b) et (c), dans la définition desquelles les produits répondant aux formules (I), (V), (VI), (VII), (VIII), (IX) présentent des groupes R¹ éthyle, R² et R³ méthyle et le groupe amovible A correspond au symbole Hal représentant un atome d'halogène choisi parmi les atomes de chlore, brome et iode, et, de préférence, un atome de chlore.

L'étape (a) consiste à faire réagir le diorganohalogénosilane de formule (V) avec le dérivé d'allyle de formule (VI) en présence d'un initiateur choisi. L'initiateur que l'on utilise comprend tous les initiateurs, répondant aux types indiqués supra, qui sont efficaces pour activer la réaction entre une fonction ≡SiH et une insaturation éthylénique.

Selon une disposition préférée concernant l'initiateur, ce dernier est choisi parmi les activateurs catalytiques. Ces activateurs catalytiques comprennent :
- au titre du (ou des) catalyseur(s) (i) : (i-1) au moins un métal de transition élémentaire finement divisé ; et/ou (i-2) un colloïde d'au moins un métal de transition ; et/ou (i-3) un oxyde d'au moins un métal de transition ; et/ou (i-4) un sel dérivé d'au moins un métal de transition et d'un acide minéral de carboxylique ; et/ou (i-5) un complexe d'au moins un métal de transition équipé de ligand(s) organique(s) pouvant posséder un ou plusieurs hétéroatome(s) et/ou de ligand(s) organosilicique(s) ; et/ou (i-6) un sel tel que défini supra où la partie métallique est équipée de ligand(s) tel(s) que défini(s) aussi supra ; et/ou (1-7) une espèce métallique choisie parmi les espèces précitées (métal de transition élémentaire, oxyde, sel, complexe, sel complexé) où le métal de transition est associé cette fois à au moins un autre métal choisi dans la famille des éléments des groupes 1b, 2b, 3a, 3b, 4a, 4b, 5a, 5b, 6b, 7b, et 8 (sauf Co, Ru, Rh, Pd, Ir et Pt) de la classification périodique telle que publiée dans "Hanbook of Chemistry and Physics, 65ème édition, 1984-1985, CRC Press, Inc.", ledit autre métal étant pris sous sa forme élémentaire ou sous une forme moléculaire, ladite association pouvant donner naissance à une espèce bi-métallique ou pluri-métallique ; et/ou (i-8) une espèce métallique choisie parmi les espèces précitées (métal de transition élémentaire et association métal de transition - autre métal ; oxyde, sel, complexe et sel complexé sur base métal de transition ou sur base association métal de transition - autre métal) qui est supportée sur un support solide inerte tel que par exemple l'alumine, la silice, le noir de carbone, une argile, l'oxyde de titane, un aluminosilicate, un mélange d'oxydes d'aluminium et de zirconium, une résine polymère ;
- au titre du (ou des) promoteur(s) optionnel(s) (2i) : un composé, qui peut présenté par exemple la forme d'un ligand ou d'un composé ionique, pris en particulier dans le groupe formé par : un péroxyde organique ; un acide carboxylique ; un sel d'acide carboxylique ; une phosphine tertiaire ; une amine ; un amide ; une cétone linéaire ou cyclique ; un trialkylhydrogénosilane ; le benzothriazole ; la phénothiazine ; un composé de type métal trivalent-(C₆H₅)₃ où métal = As, Sb ou P ; un mélange d'amine ou de cyclohexanone avec un composé organosilicique comprenant un ou plusieurs groupe(s) ≡Si-H ; les composés CH₂=CH-CH₂-OH ou CH₂=CH-CH₂-OCOCH₃ ; une lactone ; un mélange de cyclohexanone avec la triphénylphosphine ; un composé ionique comme par exemple un nitrate ou un borate de métal alcalin ou d'imidazolinium, un halogénure de phosphonium, un halogénure d'ammonium quaternaire, un halogénure d'étain II.

Selon une disposition plus préférée concernant l'initiateur, ce dernier est choisi parmi les activateurs catalytiques préférés mentionnés ci-avant qui comprennent, au titre du (ou des) catalyseur(s) (i), l'une et/ou l'autre des espèces métalliques (i-1) à (i-8) où le métal de transition appartient au sous-groupe suivant : Ir et Pt.

Selon une disposition encore plus préférée concernant l'initiateur, ce dernier est choisi parmi les activateurs catalytiques préférés mentionnés ci-avant qui comprennent, au titre du (ou des) catalyseur(s) (i), l'une et/ou l'autre des espèces métalliques (i-1) à (i-8) où le métal de transition est Ir. Dans le cadre de cette disposition encore plus préférée, des catalyseurs à base d'Ir qui conviennent sont en particulier :
[IrCl(CO)(PPh₃)₂]
[Ir(CO)H(PPh₃)₃]
[Ir(C₈H₁₂)(C₅H₅N)P(C₆H₁₁)₃]PF₆
[IrCl₃],ₙH₂O
H₂[IrCl₆],nH₂O
(NH₄)₂IrCl₆
Na₂IrCl6
K₂IrCl₆
KIr(NO)Cl₅
[Ir(C₈H₁₂)₂]⁺BF₄⁻
[IrCl(CO)₃]ₙ
H₂IrCl₆
Ir₄(CO)₁₂
Ir(CO)₂(CH₃COCHCOCH₃)
Ir(CH₃COCHCOCH₃)
IrBr₃
IrCl₃
IrCl₄
IrO₂
(C₆H₇)(C₈H₁₂)Ir.

Dans le cadre de la disposition encore plus préférée mentionnée ci-avant, d'autres catalyseurs à base d'Ir qui conviennent encore mieux sont pris dans le groupe des complexes de l'iridium de formule :

[Ir(R⁴)Hal]₂ (XI)

où :
- le symbole R⁴ représente un ligand polyène conjugué ou non conjugué, linéaire ou cyclique (mono ou polycyclique), ayant de 4 à 22 atomes de carbone et de 2 à 4 doubles liaisons éthyléniques ;
- le symbole Hal est tel que défini supra.

Comme exemple de complexes de l'iridium de formule (XII) qui conviennent encore mieux, on citera ceux dans la formule desquels :
- le symbole R⁴ est choisi parmi le butadiène-1,3, l'hexadiène-1,3, le cyclohexadiène-1,3, le cyclooctadiène-1,3, le cyclooctadiène-1,5, le cyclododécatriène-1,5,9 et le norbornadiène, et
- le symbole Hal représente un atome de chlore.

A titre d'exemples spécifiques de complexes de l'iridium qui conviennent encore mieux, on citera les catalyseurs suivants :
di-µ-chlorobis(η-1,5-hexadiene)diiridium,
di-µ-bromobis(η-1, 5-hexadiene)diiridium,
di-µ-iodobis(η-1,5-hexadiene)diiridium,
di-µ-chlorobis(η-1,5-cyclooctadiene)diiridium,
di-µ-bromobis(η-1,5-cyclooctadiene)diiridium,
di-µ-iodobis(η-1,5-cyclooctadiene)diiridium,
di-µ-chlorobis(η-2,5-norbornadiene)diiridium,
di-µ-bromobis(η-2,5-norbornadiene)diiridium,
di-µ-iodobis(η-2,5-norbornadiene)diiridium.

Le catalyseur peut être utilisé, et il s'agit là d'une autre disposition préférentielle, en milieu homogène, comme cela est décrit dans JP-B-2.938.731. Dans ce cadre, la réaction peut être conduite soit de façon continue, soit de façon semi-continue, soit de façon discontinue. En fin d'opération, le produit de la réaction est séparé et recueilli par distillation du milieu réactionnel, et il est possible de recycler le catalyseur en réalisant une nouvelle charge de réactifs sur un culot de distillation contenant le catalyseur issu de l'étape de distillation du produit de l'opération précédente, avec addition complémentaire éventuelle de catalyseur neuf. Dans le cas de l'emploi de complexes, le recyclage du catalyseur peut être amélioré en additionnant aussi une petite quantité de ligand.

Le catalyseur peut être utilisé encore en milieu hétérogène. Ce mode opératoire fait appel en particulier à la mise en oeuvre d'un catalyseur qui est supporté sur un support solide inerte du type de ceux définis supra. Ce mode opératoire permet de réaliser la réaction dans un réacteur lit fixe fonctionnant de façon continue, de façon semi-continue ou de façon discontinue avec un recyclage. Il est également possible d'effectuer la réaction en réacteur standard agité fonctionnant de façon continue, semi-continue ou discontinue.

S'agissant des autres conditions réactionnelles, la réaction est réalisée dans une large gamme de températures allant de préférence de -10°C à 100°C, en opérant sous la pression atmosphérique ou sous une pression supérieure à la pression atmosphérique qui peut atteindre ou même dépasser 20.10⁵Pa.

La quantité du dérivé d'allyle de formule (VI) utilisée est de préférence de 1 à 2 moles pour 1 mole de composé organosilicique. Quant à la quantité de catalyseur(s) (i), exprimée en poids de métal de transition pris dans le groupe formé par Co, Ru, Rh, Pd, Ir, et Pt, elle se situe dans l'intervalle allant de 1 à 10 000 ppm, de préférence allant de 10 à 2000 ppm et plus préférentiellement allant de 50 à 1000 ppm, basés sur le poids de composé organosilicique de formule (V) ou (IX). La quantité de promoteur(s) (2i), quand on en utilise un ou plusieurs, exprimée en nombre de moles de promoteur(s) par atome-gramme de métal de transition pris dans le groupe formé par Co, Ru, Rh, Pd, Ir et Pt, se situe dans l'intervalle allant de 0,1 à 1000, de préférence allant de 0,5 à 500 et plus préférentiellement allant de 1 à 300. Le dérivé de diorganohalogénosilylpropyle de formule (VII) est obtenu avec un rendement molaire au moins égal à 80% basé sur le composé organosilicique de formule (V) de départ.

Selon une disposition préférée, les polysulfures métalliques de formule (X) anhydres sont préparés par réaction d'un sulfure alcalin, contenant éventuellement de l'eau de cristallisation, de formule M₂S (XII) où le symbole M a la signification donnée supra (métal alcalin), avec du soufre élémentaire en opérant à une température allant de 60°C à 300°C, éventuellement sous pression et éventuellement encore en présence d'un solvant organique anhydre.

De manière avantageuse, le sulfure alcalin M₂S mis en oeuvre est le composé disponible industriellement qui est généralement sous forme d'un sulfure hydraté ; un sulfure alcalin de ce type qui convient bien est le sulfure Na₂S disponible dans le commerce qui est un sulfure hydraté contenant 55 à 65% en poids de Na₂S.

Selon une disposition plus préférée de conduite de l'étape (c), les polysulfures métalliques de formule (X) anhydres sont préparés au préalable à partir d'un sulfure alcalin M₂S sous forme d'un sulfure hydraté, selon un processus qui consiste à enchaîner les phases opératoires (1) et (2) suivantes :
- phase (1), où on procède à une déshydratation du sulfure alcalin hydraté en appliquant la méthode appropriée qui permet d'éliminer l'eau de cristallisation tout en conservant le sulfure alcalin à l'état solide, pendant la durée de la phase de déshydratation ;
- phase (2), où on procède ensuite à la mise en contact d'une mole de sulfure alcalin déshydraté obtenu avec n(x-1) moles de soufre élémentaire, en opérant à une température allant de 20°C à 120°C, éventuellement sous pression et éventuellement encore en présence d'un solvant organique anhydre, le facteur n précité se situant dans l'intervalle allant de 0,8 à 1,2 et le symbole x étant tel que défini supra.

A propos de la phase (1), comme protocole de déshydratation qui convient bien, on citera notamment le séchage du sulfure alcalin hydraté, en opérant sous un vide partiel allant de 1,33.10²Pa à 40.10²Pa et en portant le composé à sécher à une température allant, en début de séchage, de 70°C à 85°C, puis en élevant ensuite progressivement la température en cours de séchage de la zone allant de 70°C à 85°C jusqu'à atteindre la zone allant de 125°C à 135°C, en suivant un programme prévoyant une première montée en température de +10°C à +15°C au bout d'une première durée variant de 1 heure à 6 heures, suivie d'une seconde montée en température de +20°C à +50°C au bout d'une seconde durée variant de 1 heure à 4 heures.

A propos de la phase (2), comme protocole de sulfuration qui convient bien, on citera la réalisation de cette réaction en présence d'un solvant organique anhydre ; les solvants appropriés sont notamment les alcools aliphatiques inférieurs en C1-C4 anhydres, comme par exemple le méthanol ou l'éthanol anhydre. Le nombre d'atomes de soufre élémentaire Sₓ dans le polysulfure métallique M₂Sₓ est fonction du rapport molaire du S par rapport à M₂S ; par exemple, l'utilisation de 3 moles de S (n=1 et x-1=3) par mole de M₂S donne le tétrasulfure alcalin de formule (X) où x=4.

Pour en revenir à la réalisation de l'étape (c), cette dernière est réalisée dans une large gamme de températures allant de préférence de 50°C à 90°C, en opérant de préférence encore en présence d'un solvant organique et, dans ce cadre, on utilisera avantageusement les alcools dont on a parlé ci-avant à propos de la conduite de la phase (2).

Le produit M-A, et en particulier l'halogénure M-Hal, formé en cours de réaction est éliminé généralement en fin d'étape par exemple par filtration.

Le polysulfure de bis-(monoorganoxydiorganosilylpropyl) de formule (I) formé est obtenu avec un rendement molaire au moins égal à 80%, basé sur le dérivé de monoorganoxydiorganosilylpropyle de formule (IX) de départ.

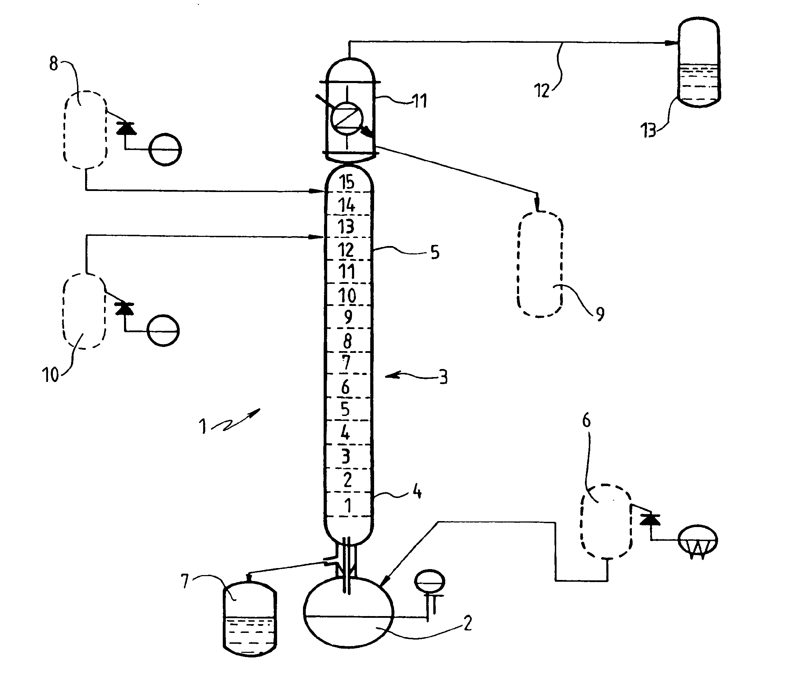

Les exemples suivants illustrent la présente invention sans en limiter la portée, référence sera faite au dessin annexé, sur lequel la figure unique représente schématiquement le dispositif réactionnel comportant une colonne utilisée dans lesdits exemples.

Sur la figure unique on voit que le dispositif 1, comporte à sa base un bouilleur 2 et une colonne 3 de 40mm de diamètre comportant une partie inférieure 4 incluant le pied de colonne, et une partie supérieure 5, incluant la tête de colonne. La colonne comporte 15 plateaux notés 1 à 15. Les plateaux sont en verre perforés. La colonne 3 est équipée d'un bac en alimentation en éthanol 6 alimentant le bouilleur 2 et certains plateaux de la partie basse 4 de la colonne, ainsi que d'un bac de récupération de liquide 7. La colonne 3 est équipée d'un second bac 8 d'alimentation éventuelle en éthanol liquide permettant d'alimenter certains des plateaux de la partie supérieure 5 de la colonne 3 pour simuler un reflux d'éthanol purifié. La colonne 3 présente un bac 9 de récupération de l'éthanol constituant le distillat et d'un bac d'alimentation 10 en silane de départ. Le silane est introduit sur un plateau de la partie supérieure 5 de la colonne, et l'éthanol en partie inférieure . La partie supérieure 5 de la colonne est coiffée d'un condenseur 11 relié par la canalisation 12 à la colonne d'abattage de HCl 13 (piège à HCl).

### Exemple 1 :

Cet exemple décrit la préparation du tétrasulfure de bis-(monoéthoxydiméthylsüylpropyle) de formule (III) dans laquelle le nombre x est centré sur 4.
Le schéma réactionnel concerné par cet exemple est le suivant :

### Etape (a) :

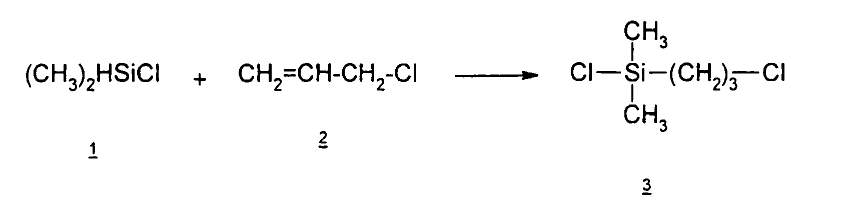

### Etape (b) :

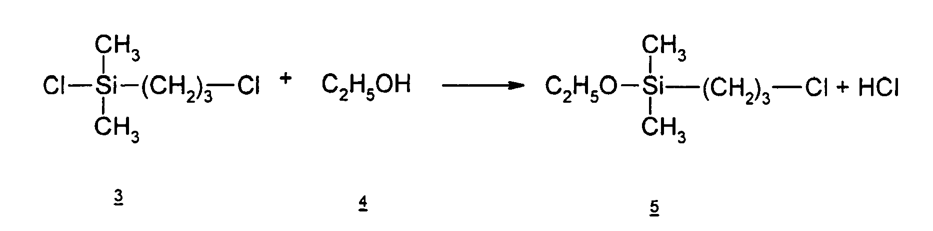

### Etape (c) :

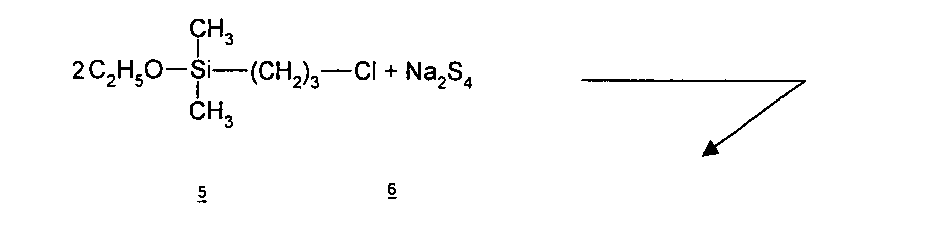

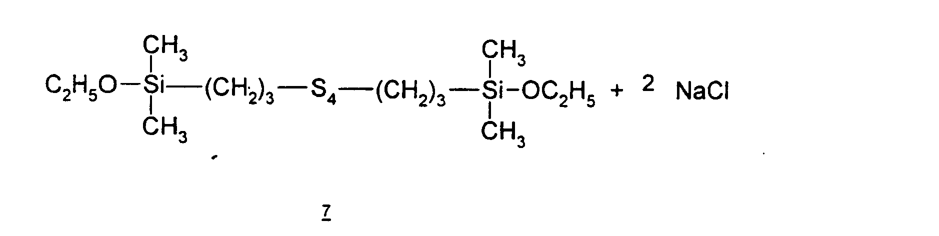

où le réactif 6 est obtenu selon l'équation :

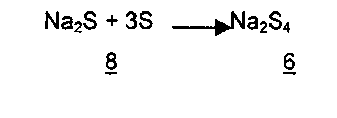

### 1) Etape (a) : synthèse de 3 :

Dans un réacteur agité d'un 1 litre, en verre, équipé d'une double enveloppe et d'un mobile d'agitation, surmonté d'une colonne de distillation, on charge 165 g de chlorure d'allyle 2 à 97,5% en poids de pureté (2,10 moles) et 0,229 g de catalyseur [Ir(COD)Cl]₂ où COD = 1,5-cyclooctadiène, et on agite pour dissoudre complètement le catalyseur. La température du mélange est ajustée à 20°C à l'aide du fluide thermique circulant dans la double enveloppe.

Le diméthylhydrogénochlorosilane 1, de pureté 99% en poids est introduit par un tube plongeant dans le milieu réactionnel, à l'aide d'une pompe : on en introduit 196,5 g (2,06 moles) en 2 heures 35 minutes. Le débit d'introduction est ajusté pour maintenir la température du milieu réactionnel entre 20 et 25°C, en tenant compte de la forte exothermie de la réaction. Le milieu réactionnel est maintenu sous agitation pendant 20 minutes après la fin de l'introduction du diméthylhydrogénochlorosilane 1.

A la fin du temps de maintien, un échantillon est prélevé pour analyse. Les résultats sont les suivants : taux de transformation du diméthylhydrogénochlorosilane 1 = 99,8%, et sélectivité en chloropropyldiméthylchlorosilane 3 = 92,7% (par analyse par chromatographie en phase gaz).

Le mélange réactionnel est ensuite distillé sous vide (environ 35.10²Pa) à environ 40°C pour obtenir deux fractions principales : ① les légers (chlorure d'allyle 2 et traces de diméthylhydrogénochlorosilane 1 résiduels, accompagnés essentiellement de chloropropyldiméthylchlorosilane 3; ② le chloropropyldiméthylchlorosilane 3, avec une pureté molaire supérieure à 98%. Il reste alors un culot de distillation constitué de produits plus lourds, et de catalyseur. Rendement molaire : 85%.

### 2) Etape (b) : synthèse de 5 :

Comme indiqué supra, on utilise une colonne telle que représentée sur la figure unique.

Le chloropropyldiméthylchlorosilane stocké dans le bac d'alimentation 10 et l'éthanol stocké dans les bacs d'alimentation 1 et 3 sont injectés directement dans la colonne 1, respectivement aux plateaux n°13 et 3. La colonne 1 est chargée par un solvant inerte approprié, dans le cas présent du toluène. Le rôle du solvant est de stripper l'acide chlorhydrique (HCl) par entraînement mécanique, l'éthanol étant également entraîné et éventuellement recyclé après purification. Le solvant également crée une zone d'épuisement (pas ou très peu d'HCl en -partie inférieure de colonne) ce qui permet de limiter l'apparition de réactions chimiques parasites

Le toluène est porté à ébullition dans le bouilleur (2) par des résistances électriques. Cette phase de démarrage se déroule à reflux total de la colonne afin de charger les plateaux de la colonne. On règle ensuite le débit de reflux par une vanne située entre le condenseur (6) et le bac de récupération du distillat (4) et non représentée sur la figure unique.

L'éthanol est injecté dans la colonne en phase liquide ou vapeur au niveau du plateau n°3 de la partie inférieure 4 de la colonne. Le débit d'éthanol est de 100 g/h. Le chloropropyldiméthylchlorosilane est injecté sur le plateau n°13 en phase liquide, avec un débit de 120 g/h. Le ratio molaire EtOH : silane est de 3,17.

L'éthanol se vaporise dans la colonne et rencontre pendant son ascension le chloropropyldiméthylchlorosilane en phase liquide qui descend vers le bouilleur. L'expérience dure pendant 5 heures et le taux de transformation globale du chloropropyldiméthylchlorosilane en chloropropyldiméthyléthoxysilane est de 92 à 94 % avec une sélectivité supérieure à 90%.

### 3) Etape (c) : synthèse de 7 :

### 3.1) Préparation du Na₂S₄ anhydre 6 :

### • Phase 1 : séchage du Na₂S hydraté :

Dans un ballon de 1 litre en verre d'un évaporateur rotatif, on introduit 43,6 g de Na₂S hydraté industriel en écailles contenant environ 60,5% en poids de Na₂S. Le ballon est mis sous atmosphère d'argon puis mis sous pression réduite à 13,3.10²Pa.

Le ballon trempe dans un bain d'huile, dont la température est alors portée à 76°C. Cette température est maintenue pendant 2 heures. Ensuite, un protocole d'augmentation de la température du bain d'huile est appliqué, afin d'éviter la fusion du Na₂S, qui se produit entre 85 et 90°C environ. L'augmentation progressive de la température a pour but d'accompagner l'évolution de la température de fusion du produit à sécher qui augmente lorsque le produit se déshydrate. Le protocole appliqué est le suivant : 1 heure à 82 °C, 2 heures à 85°C, 1 heure à 95°C, 1 heure à 115°C et enfin 1 heure à 130°C. A noter que ce protocole est modifiable en fonction de la quantité à sécher, de la pression opératoire, et d'autres paramètres ayant une influence sur la vitesse d'élimination de l'eau. La quantité d'eau éliminée, mesurée par différence de masse, est de 17,2 g, ce qui correspond à une humidité de 39,5% en poids.

### • Phase (2) : synthèse de Na₂S₄ 6 :

Le Na₂S séché (26 g), selon le protocole décrit supra, est mis en suspension dans 400 ml d'éthanol anhydre, et transvasé, par aspiration, dans un réacteur agité en verre d'un litre, double enveloppé, équipé d'un condenseur avec possibilité de reflux. On introduit en complément dans ce réacteur 31,9 g de soufre ainsi que 200 ml d'éthanol anhydre. La température du mélange est portée à 80°C environ (faible ébullition de l'éthanol), et il est agité à 600 tr/min. Le mélange est maintenu à 80°C pendant 2 heures. Progressivement, les solides (Na₂S et le soufre) disparaissent et le mélange passe du jaune à l'orange, puis au brun. En fin de réaction, le mélange est homogène à 80°C : on dispose de 58 g environ de Na₂S₄ anhydre (0,33 mole), dans 600 ml d'éthanol

### 3.2) Préparation de 7 :

Au Na₂S₄ anhydre dans 600ml d'éthanol préparé précédemment, maintenu dans son réacteur de préparation à 80°C (faible ébullition de l'éthanol) et agité à 600 tr/min, on introduit par un tube plongeant, à l'aide d'une pompe, 114 g de chloropropyldiméthyléthoxysilane 5 à 96,6% de pureté molaire (soit 0,61 mole). Un précipité de chlorure de sodium apparaît. Après la fin de l'introduction du chloropropyldiméthyléthoxysilane 5, le mélange est maintenu à 80 °C pendant 2 heures. Ensuite, le mélange est refroidi à température ambiante, soutiré puis filtré pour éliminer les solides en suspension, dont le chlorure de sodium. Le gâteau de filtration est lavé à l'éthanol pour en extraire au mieux les produits organiques. Le filtrat est réintroduit dans le réacteur pour y être distillé sous pression réduite (environ 20.10²Pa) dans le but d'éliminer l'éthanol, et les légers éventuels. On récupère 114 g de culot, qui correspond au tetrasulfure de bis-(monoéthyoxydiméthylsilylpropyle), dosé à 97% de pureté (molaire).

On obtient un rendement massique en tétrasulfure de bis-(monoéthyoxydiméthylsilylpropyle) de 87%.

Un contrôle par RMN-¹H, par RMN-²⁹Si et par RMN-¹³C permet de verifier que la structure obtenue est conforme avec la formule (III) donnée dans la description.

Le nombre moyen d'atomes de S par molécule de formule (III) est égal à 3,9 ± 0,1 (x = 3,9 ± 0,1).

### Exemple 2 à 8:

On exécute de nouveau l'étape b) de l'exemple 1, sauf que l'on modifie le niveau d'injection de l'alcool dans la colonne et/ou le ratio molaire EtOH/silane et/ou le taux de reflux. Les résultats obtenus sont rassemblés dans le tableau 1 ci-après ou TT et RT représentent respectivement le taux de transformation du chloropropyldiméthylchlorosilane et la sélectivité en chloropropyldiméthyléthoxysilane :

**Tableau 1**

| Exemple | Plateau d'injection EtOH | Plateau d'injection silane | Ratio molaire EtOH/silane | TT | RT | Taux de reflux |
|---|---|---|---|---|---|---|
| 1 | 12 | 13 | 1,2 | 20 | 88 | 0,5 |
| 2 | 12 | 13 | 3 | 70 | 93 | 0,5 |
| 3 | 12 | 13 | 6 | 68 | 91 | 0,5 |
| 4 | 3 | 13 | 1,2 | 35 | 89 | 0,5 |
| 5 | 3 | 13 | 3 | 92 | 91 | 0,5 |
| 6 | 3 | 13 | 6 | 91 | 91 | 0,5 |
| 7 | 3 | 13 | 10 | 89 | 90 | 0,5 |
| 8 | 3 | 13 | 3 | 93,5 | 86 | 1 |

Du tableau 1, il ressort qu'il est préférable d'avoir un ratio molaire EtOH/silane supérieur à 3 pour être assuré d'atteindre des valeurs de TT et de RT supérieures à 90.

On voit également qu'il est préférable d'injecter EtOH sur le plateau 3 plutôt que sur le plateau 12. Dans ce dernier cas, le volume de réaction est insuffisant.

Un autre paramètre important est le taux de reflux. Ce taux de reflux contrôle le niveau de température dans la colonne mais surtout la quantité d'HCl (solubilisé dans l'éthanol). Et cet acide est l'activateur des réactions chimiques parasites : L'exemple 8 est réalisé avec un reflux deux fois plus important que l'exemple 5, et toutes choses égales par ailleurs, conduit à une légère augmentation du rendement mais au détriment de la sélectivité (respectivement 86 et 91 % pour les exemples 8 et 5).

### Exemple 9 :

On effectue une réaction en continu dans la même colonne que les exemples précédents mais sans solvant inerte. Cette fois, le bouilleur (2) est chargé en éthanol (1200ml). La colonne (1) est chargée en portant à ébullition l'éthanol du bouilleur (2) et en travaillant à reflux total. Une fois le régime stationnaire atteint, le reflux est réglé et on injecte le 3-chloropropyldiméthylchlorosilane sur le plateau 13.

Le débit d'éthanol (phase gaz) est contrôlé en maintenant le niveau dans le bouilleur constant. Le débit en éthanol est de 500 g/h, et le débit en chloropropyldiméthylchlorosilane de 150 g/h, soit un ratio molaire EtOH : silane de 12. Le rendement de la réaction est de 100% quelque soit le taux de reflux. Par contre, la sélectivité est fonction de ce taux de reflux : de 50% pour un reflux de 750 g/h à plus de 85 % pour un reflux nul. Il est à noter que dans la colonne utilisée, même à reflux nul, une fraction de l'éthanol est condensé directement dans la colonne. Ceci peut être évité par introduction du chloropropyldiméthylchlorosilane préalablement préchauffé à 80°C pour éviter le refroidissement de l'éthanol et sa condensation.

### Exemple 10 :

Même expérience que l'exemple 3 avec introduction du chloropropyldiméthylchlorosilane au plateau n°7. Les résultats sont identiques à l'exemple précédent : TT 100% et RT > 85 %.

## Revendications

1. Procédé continu de préparation d'un organodialkylalcoxysilane de formule (IX) :
R¹O-------(R²R³)Si---(CH₂)₃---A
consistant à procéder à une mise en contact continue à contre courant d'un alcool de formule (VIII) : R¹-OH avec un silane de formule (VII) : Hal---(R²R³)Si-(CH₂)₃---A, pour réaliser la réaction d'alcoolyse dudit silane selon la réaction : 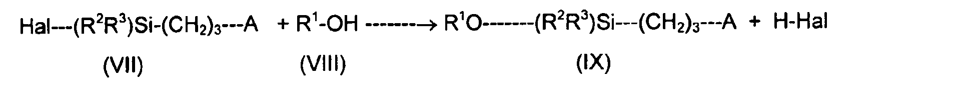 en opérant avec stripage du produit de formule H-Hal formé et récupération de l'organodialkylalcoxysilane formé dans le réacteur, formules dans lesquelles
- le symbole Hal représente un atome d'halogène choisi parmi les atomes de chlore, brome et iode,
- les symboles R¹, identiques ou différents, représentent chacun un groupe hydrocarboné monovalent choisi parmi un radical alkyle, linéaire ou ramifié, ayant de 1 à 15 atomes de carbone et un radical alcoxyalkyle, linéaire ou ramifié, ayant de 2 à 8 atomes de carbone ;
- les symboles R² et R³, identiques ou différents, représentent chacun un groupe hydrocarboné monovalent choisi parmi un radical alkyle, linéaire ou ramifié, ayant de 1 à 6 atomes de carbone et un radical phényle ;
- A représente un groupe amovible choisi parmi : soit un atome d'halogène Hal appartenant aux atomes de chlore, brome et iode ; soit un radical para-R⁰-C₆H₄-SO₂-O- où R⁰ est un radical alkyle, linéaire ou ramifié en C1-C4 ; soit un radical R⁰-SO₂-O-
où R⁰ est tel que défini ci-avant ; soit un radical R⁰-CO-O- où R⁰ est tel que défini ci-avant.

2. Procédé selon la revendication 1, **caractérisé en ce que** à l'intérieur du réacteur vont circuler à contre-courant un fluide liquide descendant comprenant le silane de formule (VII), et un fluide gazeux ascendant comprenant l'alcool de formule (VIII).

3. Procédé selon la revendication 1 ou 2, **caractérisé en ce que** la réaction d'alcoolyse est mise en oeuvre à l'intérieur du réacteur à une température comprise entre la température d'ébullition de l'alcanol de formule (VIII) et la température d'ébullition du silane de départ de formule (VII), la réaction étant mise en oeuvre dans le réacteur soit à pression atmosphérique, soit à pression réduite, soit à pression supra atmosphérique.

4. Procédé selon la revendication 3, **caractérisé en ce que** : le silane utilisé est le 3-chloropropyldiméthylchlorosilane ; il est introduit en partie supérieure du réacteur ; l'éthanol est intoduit en partie inférieure ; la température de réaction dans la colonne est supérieure à 77,80 °C et inférieure à 178 °C à pression atmosphérique ; et l'acide chlorhydrique formé est strippé par l'éthanol.

5. Procédé selon l'une quelconque des revendications 1 à 4, **caractérisé en ce que** la réaction est mise en oeuvre en présence en présence d'un solvant organique ou d'un gaz inerte, ledit solvant ayant une température d'ébullition à la pression de service comprise entre la température d'ébullition de l'éthanol de formule (VIII) et celle du silane de formule (VII).

6. Procédé selon la revendication 5, **caractérisé en ce que** le solvant est le toluène, le monochlorobenzene, ou le xylène et les produits répondant aux formules (I) à (XI) présentent des groupes R¹ éthyle et des groupes R² et R³ méthyle et A et Hal représentent un atome de chlore.

7. Procédé selon l'une quelconque des revendications 1 à 6, **caractérisé en ce que** la pression à l'intérieure du réacteur est la pression atmosphérique.

8. Procédé selon l'une quelconque des revendications 1 à 6, **caractérisé en ce que** la pression à l'intérieur du réacteur est inférieure ou supérieure à la pression atmosphérique.

9. Procédé selon l'une quelconque des revendications 1 à 8, **caractérisé en ce que** le rapport molaire alcool/silane est supérieur à 1.

10. Procédé selon l'une quelconque des revendications 1 à 9, **caractérisé en ce que** le réacteur à contre-courant consiste dans une colonne munie dans sa structure interne d'un garnissage de type vrac ou ordonné ou de plateaux.

## Claims

1. A continuous process for preparing an organodialkylalkoxysilane of formula (IX) :
R¹O-----(R²R³)Si-----(CH₂)₃-----A
which consists in continuously contacting an alcohol of formula (VIII) : R¹-OH in countercurrent with a silane of formula (VII) : Hal--- (R²R³) Si- (CH₂) ₃---A, in order to carry out the alcoholysis reaction of said silane according to the following reaction : 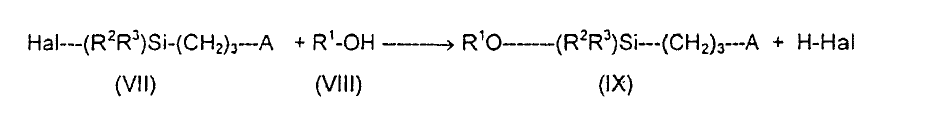 the operation being carried out with stripping of the product of formula H-Hal formed and recovery of the organodialkylalkoxysilane formed in the reactor, in which formulae
- the symbol Hal represents a halogen atom selected from chlorine, bromine and iodine atoms,
- the symbols R¹, which are identical or different, each represent a monovalent hydrocarbon group selected from a linear or branched alkyl radical having 1 to 15 carbon atoms and a linear or branched alkoxyalkyl radical having 2 to 8 carbon atoms ;
- the symbols R² and R³, which are identical or different, each represent a monovalent hydrocarbon group selected from a linear or branched alkyl radical having 1 to 6 carbon atoms and a phenyl radical ;
- A represents a removable group selected alternatively from: a halogen atom Hal belonging to chlorine, bromine and iodine atoms ; or a radical para-R⁰-C₆H₄-SO₂-O- where R⁰ is a linear or branched C1-C4 alkyl radical ; or a radical R⁰-SO₂-O- where R⁰ is as defined above ; or a radical R⁰-CO-O- where R⁰ is as defined above.

2. The process according to claim 1, **characterized in that** within the reactor a descending liquid fluid comprising the silane of formula (VII) and an ascending gaseous fluid comprising the alcohol of formula (VIII) will circulate in countercurrent.

3. The process according to claim 1 or 2, **characterized in that** the alcoholysis reaction is carried out within the reactor at a temperature between the boiling temperature of the alkanol of formula (VIII) and the boiling temperature of the starting silane of formula (VII), the reaction being carried out in the reactor alternatively at atmospheric pressure or at reduced pressure or at superatmospheric pressure.

4. The process according to claim 3, **characterized in that** : the silane which is used is the 3-chloropropyldimethylchlorosilane ; it is introduced in the upper part of the reactor ; the ethanol is introduced in the lower part ; the reaction temperature in the column is greater than 77.80 °C and less than 178 °C at atmospheric pressure ; and the hydrochloric acid formed is stripped by the ethanol.

5. The process according to any one of claims 1 to 4, **characterized in that** the reaction is carried out in the presence of an organic solvent or an inert gas, said solvent having a boiling temperature at the operating pressure which is between the boiling temperature of the ethanol of formula (VIII) and that of the silane of the formula (VII).

6. The process according to claim 5, **characterized in that** the solvent is toluene, monochlorobenzene or xylene and the products corresponding to formulae (I) to (XI) have ethyl groups R¹ and methyl groups R² and R³ and A and Hal represent a chlorine atom.

7. The process according to any one of claims 1 to 6, **characterized in that** the pressure inside the reactor is atmospheric pressure.

8. The process according to any one of claims 1 to 6, **characterized in that** the pressure inside the reactor is less than or greater than atmospheric pressure.

9. The process according to any one of claims 1 to 8, **characterized in that** the alcohol/silane molar ratio is greater than 1.

10. Process according to any one of claims 1 to 9, **characterized in that** the countercurrent reactor consists of a column equipped in its internal structure with a dumped or ordered packing or with plates.

## Patentansprüche

1. Kontinuierliches Verfahren zur Herstellung eines Organodialkylalkoxysilans der Formel (IX):
R¹O-------(R²R³)Si---(CH₂)₃---A
welches darin besteht, einen Alkohol der Formel (VIII): R¹-OH mit einem Silan der Formel (VII): Hal---(R²R³)Si-(CH₂)₃---A im Gegenstrom kontinuierlich in Kontakt zu bringen, um die Reaktion der Alkoholyse des Silans entsprechend der folgenden Reaktion durchzuführen: 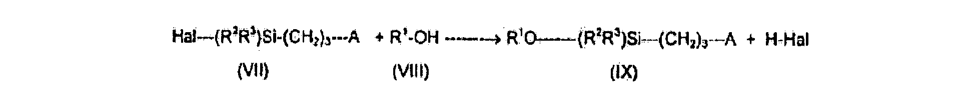 indem Strippen des gebildeten Produkts der Formel H-Hal und Wiedergewinnen des in dem Reaktor gebildeten Organodialkylalkoxysilans ausgeführt wird, wobei in den Formeln
- das Symbol Hal ein Halogenatom gewählt aus den Atomen Chlor, Brom und Jod darstellt,
- die Symbole R¹, identisch oder verschieden, jeweils eine monovalente Kohlenwasserstoffgruppe gewählt aus einem Alkylradikal, linear oder verzweigt, mit 1 bis 15 Kohlenstoffatomen und einem Alkoxyalkylradikal, linear oder verzweigt, mit 2 bis 8 Kohlenstoffatomen darstellen;
- die Symbole R² und R³, identisch oder verschieden, jeweils eine monovalente Kohlenwasserstoffgruppe gewählt aus einem Alkylradikal, linear oder verzweigt, mit 1 bis 6 Kohlenstoffatomen und einem Phenylradikal darstellen;
- A eine entfernbare Gruppe darstellt, gewählt aus: entweder einem Halogenatom Hal, das zu den Atomen Chlor, Brom und Jod gehört; oder einem Radikal para-R⁰-C₆H₄-SO₂-O-, wobei R⁰ ein Alkylradikal, linear oder verzweigt mit C1-C4 ist; oder einem Radikal R⁰-SO₂-O, wobei R⁰ wie oben definiert ist; oder einem Radikal R⁰-CO-O-, wobei R⁰ wie oben definiert ist.

2. Verfahren gemäß Anspruch 1, **dadurch gekennzeichnet, dass** in dem Reaktor im Gegenstrom ein liquides Fluid, das das Silan der Formel (VII) aufweist, abwärts zirkuliert und ein gasförmiges Fluid, das den Alkohol der Formel (VIII) aufweist, aufwärts zirkuliert.

3. Verfahren gemäß Anspruch 1 oder 2, **dadurch gekennzeichnet, dass** die Reaktion der Alkoholyse in dem Reaktor bei einer Temperatur zwischen der Siedetemperatur des Alkohols der Formel (VIII) und der Siedetemperatur des Ausgangssilans der Formel (VII) durchgeführt wird, wobei die Reaktion in dem Reaktor entweder bei atmosphärischem Druck oder bei reduziertem Druck oder bei einem überatmosphärischen Druck durchgeführt wird.

4. Verfahren gemäß Anspruch 3, **dadurch gekennzeichnet, dass**: das verwendete Silan 3-Chlorpropyldimethylchlorsilan ist; es in den oberen Teil des Reaktors eingebracht wird; das Ethanol in den unteren Teil eingebracht wird; die Reaktionstemperatur in der Kolonne über 77,80°C und unter 178°C bei atmosphärischem Druck ist; und die gebildete Salzsäure durch Ethanol gestrippt wird.

5. Verfahren gemäß einem der Ansprüche 1 bis 4, **dadurch gekennzeichnet, dass** die Reaktion in Gegenwart eines organischen Lösungsmittels oder eines inerten Gases durchgeführt wird, wobei das Lösungsmittel bei dem Betriebsdruck eine Siedetemperatur aufweist, die zwischen der Siedetemperatur des Ethanols der Formel (VIII) und der des Silans der Formel (VII) liegt.

6. Verfahren gemäß Anspruch 5, **dadurch gekennzeichnet, dass** das Lösungsmittel Toluol, Monochlorbenzol oder Xylol ist und in den Produkte, die den Formeln (I) bis (XI) entsprechen, die Gruppen R¹ Ethyl darstellen und die Gruppen R² und R³ Methyl darstellen und A und Hal ein Chloratom darstellen.

7. Verfahren gemäß einem der Ansprüche 1 bis 6, **dadurch gekennzeichnet, dass** der Druck in dem Reaktor atmosphärischer Druck ist.

8. Verfahren gemäß einem der Ansprüche 1 bis 6, **dadurch gekennzeichnet, dass** der Druck in dem Reaktor höher oder niedriger als atmosphärischer Druck ist.

9. Verfahren gemäß einem der Ansprüche 1 bis 8, **dadurch gekennzeichnet, dass** das Molverhältnis Alkohol/Silan größer als 1 ist.

10. Verfahren gemäß einem der Ansprüche 1 bis 9, **dadurch gekennzeichnet, dass** der Gegenstrom-Reaktor aus einer Kolonne besteht, deren Innenstruktur mit Füllkörpern loser Art, geordneter Art oder plattenartig ausgestattet ist.
